# EUROPÄISCHE PATENTANMELDUNG

(11) **EP 1 275 795 A2**
(43) Veröffentlichungstag der Anmeldung: **15.01.2003**
(21) Anmeldenummer: 02015035.5
(22) Anmeldetag: 05.07.2002
(51) Int. Cl.: E04F 15/04, E04F 15/02, F16C 11/12

(54) **Fussbodenbelagselement mit Paneelen**

(30) Priorität: 11.07.2001 DE 10133101
(71) Anmelder: E.F.P. Floor Products Fussböden GmbH, 6380 St. Johann in Tirol (AT)
(72) Erfinder: Pletzer, Stefan, 6382 Kirchdorf (AT); Weber, Jürgen, 59469 Ense (DE); Heitzinger, Johann, 6380 St. Johann in Tirol (AT)
(74) Vertreter: Rox, Thomas Dr.

(57) **Zusammenfassung**

Die Erfindung betrifft ein Fußbodenbelagselement mit zwei Paneelen (2,4), die jeweils eine erste Längskante (6) und eine zweite Längskante (8), zwei Querkanten (10), eine dem Fußbodenuntergrund zugewandte Unterseite (12) und eine vom Fußbodenuntergrund abgewandte Oberseite (14) aufweisen, und mit an den zweiten Längskanten (8) und an den Querkanten (10) ausgebildeten mechanischen Verbindungsmitteln (16,18; 20,22) für ein wechselseitiges Verbinden mit weiteren Paneelen, bei dem das technische Problem, den aus dem Stand der Technik bekannten Fußbodenbelag dahingehend weiterzuentwickeln, dass unter Beibehaltung der Paneelenabmessungen bereits werksseitig die Paneelen miteinander verbunden werden können, ohne eine flexible Handhabung bei Lagerung und Transport aufzugeben, dadurch gelöst ist, dass zumindest abschnittsweise an den aneinandergrenzenden ersten Längskanten (6) der Paneelen (2,4) ein Scharnier, vorzugsweise ein Klebstoffstreifen (28) ausgebildet ist, wobei die Paneelen (2,4) um eine im wesentlichen parallel zu den ersten Längskanten (6) ausgerichtete und benachbart zu den Oberseiten (14) der Paneelen (2,4) angeordnete Schwenkachse verschwenkbar sind.

## Beschreibung

Die Erfindung betrifft ein Fußbodenbelagselement mit zwei Paneelen, die jeweils eine erste Längskante und eine zweite Längskante, zwei Querkanten, eine dem Fußbodenuntergrund zugewandte Unterseite und eine vom Fußbodenuntergrund abgewandte Oberseite aufweisen, und mit an den zweiten Längskanten und an den Querkanten ausgebildeten mechanischen Verbindungsmitteln für ein wechselseitiges Verbinden mit weiteren Paneelen.

Ein derartiges Fußbodenbelagselement ist allgemein aus dem Stand der Technik bekannt, wobei die mechanischen Verbindungsmittel in der Regel als Nut-Feder-Verbindung ausgebildet sind. Die Nut-Feder-Verbindungen werden entweder mit Hilfe eines aufgetragenen Leims dauerhaft verbunden oder die Nut-Feder-Verbindung weist mechanische Verriegelungsmittel auf, um ein mechanisches Verriegeln der somit verbundenen Paneele während des Verlegens der Paneelen zu erreichen.

Insbesondere bei den zu verklebenden Nut-Feder-Verbindungen kommt es während des Verlegens häufig zu Fehlern, die durch eine mangelhafte Ausrichtung der Paneelen zum bis dahin verlegten Verbund von Paneelen entstehen. So kommt es vor, dass die Paneelen nicht sämtlich parallel zueinander verlegt werden und es zu einer Auffächerung bzw. zu krummlinigen Verläufen der Ausrichtungen der verlegten Paneelen zueinander kommt.

Darüber hinaus weisen die Paneelen der herkömmlichen Art eine Länge auf, die erheblich größer ist als die Breite. Somit kann eine einzelne Paneele nicht oder nur ungenügend entlang der Querkante in Anschlag an eine bereits verlegte Paneele und deren Querkante gebracht werden, um die gesamte Paneele in Längsrichtung auszurichten. Mit anderen Worten sind die Schenkel des von der Querkante und der Längskante gebildeten Winkels nicht beidseitig so groß, dass ein geeignetes Ausrichten der Paneelen zueinander möglich ist.

Dennoch haben sich die langgestreckten Paneelen gerade im Fußbodenbereich aufgrund ihrer für eine Lagerung und für einen Transport geeignete Form durchgesetzt.

Der Erfindung liegt daher das technische Problem zugrunde, das aus dem Stand der Technik bekannte Fußbodenbelagselement dahingehend weiterzuentwickeln, dass unter Beibehaltung der Paneelenabmessungen bereits werksseitig die Paneelen miteinander verbunden werden können, ohne eine flexible Handhabung bei Lagerung und Transport aufzugeben.

Das zuvor aufgezeigte technische Problem wird gemäß Anspruch 1 durch ein Fußbodenbelagselement mit zwei Paneelen dadurch gelöst, dass zumindest abschnittsweise an den aneinandergrenzenden ersten Längskanten der Paneelen ein Scharnier ausgebildet ist, wobei die Paneelen um eine im wesentlichen parallel zu den ersten Längskanten ausgerichtete Schwenkachse verschwenkbar sind.

Erfindungsgemäß ist somit erkannt worden, dass bereits nach der Herstellung der einzelnen Paneelen diese miteinander verschwenkbar verbunden und somit als eine Einheit gelagert und transportiert werden können. Das besondere dabei ist, dass die Scharnierverbindung zwar einerseits eine feste Fixierung und Ausrichtung der beiden Paneelen entlang der Längskanten bewirkt, so dass beim Verlegen der Paneelen keine zusätzlichen Maßnahmen entlang dieser Längskanten erforderlich sind. Die Verbindung mit einem Scharnier erlaubt jedoch andererseits ein Verschwenken der beiden Paneelen um die Schwenkachse herum, so dass die beiden Paneelen ihre relative Position zueinander verändern können. Dieses kann bei der Lagerung und dem Transport sowie beim Verlegen der Paneelen in vorteilhafter Weise eingesetzt werden.

Das Scharnier kann in verschiedener Weise ausgebildet und mit den Längskanten verbunden sein. Bevorzugt ist, dass das Scharnier mit einem Klebstoff an den beiden Längskanten befestigt ist. Somit läßt sich bereits werksseitig präzise und dennoch einfach die verschwenkbare Verbindung herstellen. In vorteilhafter Weise ist das Scharnier als Klebestreifen ausgebildet. Dabei kann der Klebestreifen als Klebeband mit einem Trägermaterial und einer damit verbundenen Klebstoffschicht ausgebildet sein, so dass beispielsweise herkömmliches Klebeband eingesetzt werden kann.

In bevorzugter Weise ist der Klebestreifen als Klebstoffstreifen ausgebildet, wobei der Klebstoff des Klebstoffstreifens ein elastischer, insbesondere dauerelastischer Klebstoff sein kann. Als Beispiele für einsetzbare Klebstoffe können ein Polyuretanklebstoff, ein Reaktivschmelzklebstoff, ein Schmelzklebstoff, insbesondere Ethylenvinylacetat, oder ein Silikonklebstoff genannt werden. Diese Klebstoffe ermöglichen eine dauerhafte Elastizität des Scharniers bei gleichzeitiger guter Haftung am Material der Paneelen.

Weiterhin ist es bevorzugt, dass der Klebstoff eine Dicke von 0,1 bis 0,4 mm aufweist, wobei auch geringere Dicken und größere Dicken eingesetzt werden können.

Ein weiterer Vorteil des Verklebens der beiden Paneelen entlang der ersten Längskanten und benachbart zu den Oberseiten besteht darin, dass die Verbindung entlang dieser Längskanten ohne weiteres Zutun bereits versiegelt ist und somit gegenüber dem Eindringen von Feuchtigkeit oder Schmutz geschützt ist.

Bei einer weiteren Ausgestaltung der Erfindung ist das Scharnier mechanisch an der Längskante befestigt. Dazu können vorgefertigte Scharniere verwendet werden, die nach einem Herstellen der Paneelen mit deren ersten Längskanten vernagelt, verschraubt oder formschlüssig oder kraftschlüssig verbunden werden.

In bevorzugter Weise ist die Schwenkachse benachbart zu den Oberseiten angeordnet, so dass die beiden Paneelen zwischen einer ersten Position, in der die Oberseiten aneinander liegen, und einer zweiten Position in der die Oberseiten im wesentlichen in einer Ebene liegend ausgerichtet sind, verschwenkbar sind. Somit bietet das verschwenkbare Verbinden der Paneelen eine ausreichende Freiheit, die Paneelen so übereinander anzuordnen, dass diese mit ihren Oberseiten aufeinander liegen. Für die Lagerung und für den Transport wird somit die gleiche Packungsgröße wie bei einem herkömmlichen Bodenbelag mit einzelnen Paneelen erreicht. Während des Verlegens des Fußbodenbelagselementes werden dann die Paneelen in ihre zweite Position verschwenkt, so dass beide Paneelen mit ihren Unterseiten auf dem Fußbodenuntergrund aufliegen.

Dadurch wird die Dimension des Fußbodenbelagselements insbesondere an den Querseiten dahingehend verändert, dass diese im Verhältnis zu den Längskanten vergrößert sind. Daher ergeben sich geringere Fehlerquellen beim Verlegen der Fußbodenbelagselemente, die sich aus der geringen Länge der Querkante im Verhältnis zur Längskante ergeben.

Bei einer weiteren Ausgestaltung der vorliegenden Erfindung ist die Schwenkachse benachbart zu den Unterseiten angeordnet, so dass die Paneelen zwischen einer ersten Position, in der die Unterseiten aneinander liegen, und einer zweiten Position, in der die Unterseiten im wesentlichen in einer Ebene liegend ausgerichtet sind, verschwenkbar sind.

Bei der zuletzt angegebenen Ausführungsform kann das Scharnier nicht nur entlang der ersten Längskanten, sondern auch an den Unterseiten der Paneelen befestigt sein. Diese Befestigungsweise dient einem leichteren und zugleich präzisen Verbinden der Paneelen mit dem Scharnier.

Mit beiden zuvor erläuterten Ausführungen der Anordnung der Schwenkachsen benachbart zu den Oberseiten und den Unterseiten lässt sich die folgende vorteilhafte Anordnung erzielen.

Mindestens drei Paneelen sind miteinander verbunden, wobei die außen gelegenen Paneelen eine erste Längskante und eine zweite Längskante aufweisen und wobei die innen gelegenen Paneelen zwei erste Längskanten aufweisen, die jeweils paarweise mit einem Scharnier miteinander verbunden sind. Sind darüber hinaus die Schwenkachsen der Scharniere zwischen jeweils zwei Paneelen abwechselnd benachbart zu den Unterseiten und benachbart zu den Oberseiten angeordnet, so können die Paneelen abwechselnd aufeinander zu verschwenkt werden. Somit ist eine Stapelung einer Mehrzahl von Paneelen möglich, die im gestapelten Zustand abwechselnd mit den Oberseiten oder mit den Unterseiten aneinander anliegen.

Sind dagegen die Schwenkachsen zwischen den Paneelen jeweils benachbart nur zu einer Seite, insbesondere der Unterseite, angeordnet, so können eine Mehrzahl von Paneelen für eine Lagerung oder einen Transport aufgerollt werden. Dabei beträgt die Anzahl der Paneelen pro Umfang der Rolle mindestens 5, vorzugsweise mindestens 10 und insbesondere mindestens 15. Damit wird erreicht, dass die einzelnen Paneelenpaare nicht unter einem zu großen Winkel relativ zueinander angeordnet sind und ein Aufrollen mehrerer Lagen von Paneelen auf einer Rolle möglich ist.

Bei einer weiteren bevorzugten Ausgestaltung der vorliegenden Erfindung sind mechanische Verriegelungselemente an den ersten Längskanten vorgesehen, die nach einem Verschwenken der Paneelen von der ersten Position in die zweite Position verriegelt sind. Dazu sind die Verriegelungselemente insbesondere als verriegelnde Nut-Feder-Verbindung ausgebildet. Durch eine derartige Verriegelung wird bei den scharnierartig miteinander verbundenen Paneelen erreicht, dass diese im verlegten Zustand eine stabile Fläche bilden. Denn durch das Verriegeln der ersten Längskanten werden diese in ihrer Ausrichtung aufeinander stabilisiert und sind somit unempfindlicher gegen Unebenheiten des Fußbodenuntergrundes.

In weiterer bevorzugter Weise ist mindestens ein Paar von Passflächen vorgesehen, das eine genaue Lage der beiden Paneelen senkrecht zu den Oberseiten zueinander definiert. Denn durch die Passflächen wird bei einer passgenauen Anlage der Paneelen aneinander erreicht, dass beide Paneelen im Bereich der ersten Längskanten fluchtende
Oberseiten aufweisen. Dieses ist insbesondere für einen dichten Fugenschluss ohne Ausbilden einer kleinen Kante oder Stufe vorteilhaft.

Weiterhin können die Verriegelungselemente die Passflächen der Paneelen in Anlage aneinander halten. Somit wird nach einem Verriegeln der beiden Paneele miteinander die passgenaue Ausrichtung der Paneelen erreicht und stabilisiert.

Wenn das Scharnier benachbart zu den Oberseiten angeordnet ist, dann wird durch das Scharnier erreicht, dass die Paneelen entlang der Längskanten aneinander liegen und eine Fugenbildung verhindert wird. Im umgekehrten Fall kann in vorteilhafter Weise Vorsorge vor einer Fugenbildung getroffen werden. Dazu weisen die Längskanten an der vom Scharnier abgewandten Seite im wesentlichen senkrecht zu den Unterseiten und den Oberseiten verlaufende Anlageflächen auf. Die benachbart zu den Oberseiten angeordneten Anlageflächen sind dann im verlegten Zustand zumindest teilweise miteinander verklebt. Somit wird, beispielsweise ohne die zuvor erwähnten mechanische Verriegelung der ersten Längskanten, eine dichte und stabilisierte Fuge erreicht.

Darüber hinaus können die, insbesondere benachbart zu den Oberseiten angeordneten Anlageflächen zumindest teilweise eine Oberflächenversiegelung und/oder Oberflächenhärtung aufweisen. Damit wird verhindert, dass Feuchtigkeit und Schmutz im Bereich der Längskanten in das Material der Paneelen eindringt und die Qualität der Verbindung verringert wird.

Weiterhin ist es von besonderem Vorteil, wenn das Scharnier, vorzugsweise also der Klebstoff des Klebstoffstreifens, einen vorgegebenen, insbesondere an den Farbton der Oberseiten der Paneelen angepassten Farbton aufweist. Denn je nach Ausgestaltung der ersten Längskanten ist im verlegten Zustand des Bodenbelagselementes mehr oder weniger Klebstoff des Klebstoffstreifens zwischen den Längskanten zu erkennen. Der optische Eindruck der somit entstehenden Klebstofffuge wird verbessert, wenn diese entweder möglichst wenig im Vergleich zu der farblichen Ausgestaltung der Oberseiten auffällt oder sich gezielt von dieser abgrenzt. Letzteres kann beispielsweise bewusst für das Aussehen eines Fliesendekors mit andersfarbigen Fugen genutzt werden.

Als Material der Paneelen der zuvor beschriebenen Fußbodenbelagselemente kommen sowohl Holzwerkstoffe, insbesondere hochdichte Faserplatten (HDF) oder mitteldichte Faserplatten (MDF) mit oder ohne (Laminat-) Beschichtung, Oriented Strand Boards (OSB) oder Spanplatten, als auch Kunststoffe in Betracht. Ebenso können die mechanischen Verbindungsmittel an den ersten und zweiten Längskanten einstückig mit dem Kern der Paneelen oder als separate, mit dem Kern der Paneelen verbundene Elemente ausgebildet sein.

Weitere Merkmale und Vorteile der vorliegenden Erfindung werden durch die nachfolgende Beschreibung verschiedener Ausführungsbeispiele näher erläutert. In dieser Beschreibung wird auf die beigefügte Zeichnung bezug genommen, in dieser zeigen
- Fig. 1: ein erstes Ausführungsbeispiel eines erfindungsgemäßen Fußbodenbelagselementes,
- Fig. 2: ein zweites Ausführungsbeispiel eines erfindungsgemäßen Fußbodenbelagselementes,
- Fig. 3: ein drittes Ausführungsbeispiel eines erfindungsgemäßen Fußbodenbelagselementes,
- Fig. 4: das in Fig. 1 dargestellte Fußbodenbelagselement mit einer zu verleimenden Nut-Feder-Verbindung an den zweiten Längskanten,
- Fig. 5: das in Fig. 1 dargestellte Ausführungsbeispiel mit einer zu verriegelnden Nut-Feder-Verbindung an den zweiten Längskanten,
- Fig. 6: ein dem ersten Ausführungsbeispiel entsprechendes viertes Ausführungsbeispiel, bei dem eine Mehrzahl von Paneelen miteinander verbunden sind,
- Fig. 7: in einer Draufsicht das in Fig. 1 dargestellte erste Ausführungsbeispiel im verlegten Zustand,
- Fig. 8: ein fünftes Ausführungsbeispiel, bei dem eine Mehrzahl von Paneelen miteinander verbunden sind, und
- Fig. 9 bis 11: verschiedene Ausführungsbeispiele für Verriegelungselemente an den ersten Längskanten.

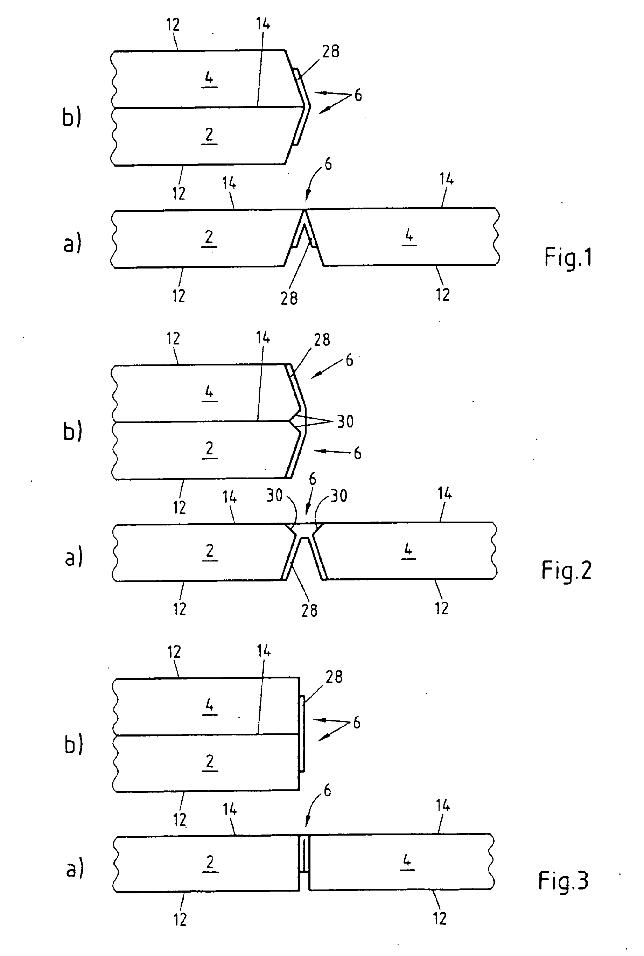

In den Fig. 1 bis 3 sind drei Ausführungsbeispiele von erfindungsgemäßen Fußbodenbelagselementen mit zwei Paneelen 2 und 4 dargestellt. In den Teilfiguren a) sind die beiden Paneele in einer Verlegeposition dargestellt, während die Teilfiguren b) die beiden Paneelen 2 und 4 in ihrer Transport- bzw. Lagerposition darstellen. Zudem kennzeichnen gleiche Bezugszeichen in den Fig. 1 bis 3 einander entsprechende Merkmale der Fußbodenbelagselemente.

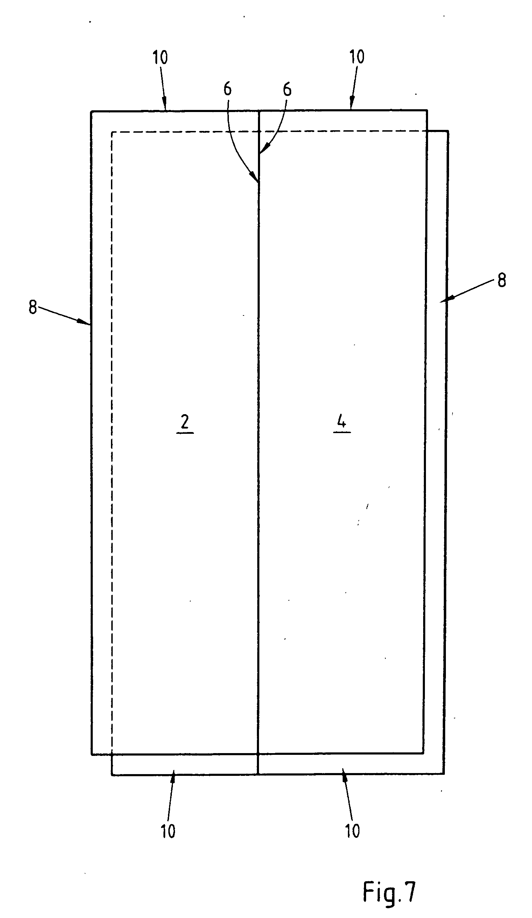

Fig. 7 zeigt in einer Draufsicht die beiden Paneelen 2 und 4 in ihrer Verlegeposition. Die Paneelen 2 und 4 weisen jeweils erste Längskanten 6 und zweite Längskanten 8 sowie jeweils zwei Querkanten 10 auf. Des weiteren weisen, wie die Fig. 1 bis 3 zeigen, die beiden Paneelen 2 und 4 eine dem Fußbodenuntergrund zugewandte Unterseite 12 und eine vom Fußbodenuntergrund abgewandte Oberseite 14 auf.

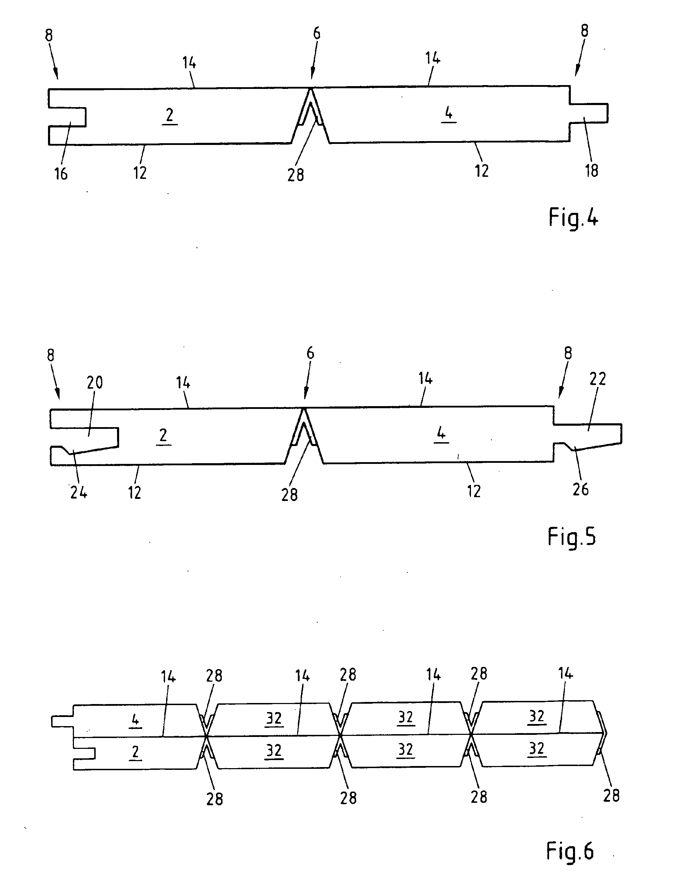

Wie die Fig. 4 und 5 für das in Fig. 1 dargestellte erste Ausführungsbeispiel zeigen, weisen die zweiten Längskanten 8 Verbindungsmittel in Form einer zu verklebenden Nut-Feder-Verbindung mit einer Nut 16 und einer Feder 18 auf, wie Fig. 4 zeigt. In Fig. 5 ist eine Ausführung der mechanischen Verbindungsmittel in Form einer verrastenden Nut-Feder-Verbindung mit Nut 20 und Feder 22 dargestellt. Diese Verriegelungsmittel weisen aus dem Stand der Technik bekannte Verriegelungselemente 24 und 26 auf.

Die zuvor beschriebenen mechanischen Verbindungsmittel dienen einem wechselseitigen Verbinden mit weiteren Paneelen weiterer Fußbodenbelagselemente während des Verlegens des Fußbodenbelages. Die konkrete Ausgestaltung der mechanischen Verbindungsmittel 16, 18 sowie 20, 22 ist dabei unerheblich, es kommen somit sämtliche aus dem Stand der Technik bekannten Formen von Nut-Feder-Verbindungen in Frage.

Bei dem in Fig. 1 dargestellten ersten Ausführungsbeispiel eines erfindungsgemäßen Fußbodenbelagselementes ist als Scharnier ein Klebstoffstreifen 28 an den aneinandergrenzenden ersten Längskanten 6 der Paneelen 2 und 4 ausgebildet. Auch wenn im folgenden das Scharnier als Klebstoffstreifen dargestellt wird, ist dieses nicht beschränkend für die Erfindung auszulegen. Der Klebstoffstreifen 28 verbindet die beiden Paneelen 2 und 4 scharnierartig miteinander, so dass die Paneelen 2 und 4 um eine im wesentlichen parallel zu den ersten Längskanten 6 ausgerichtete und benachbart zu den Oberseiten 14 der Paneelen 2 und 4 angeordnete Schwenkachse verschwenkbar sind. Somit können die beiden Paneelen 2 und 4 zwischen einer ersten Position, in der die Oberseiten 14 aneinander liegen, siehe Fig. 1b, und einer zweiten Position in der die Oberseiten 14 im wesentlichen in einer Ebene liegend ausgerichtet sind, siehe Fig. 1a, verschwenkt werden.

Mit anderen Worten können die beiden Paneelen 2 und 4 aus der in Fig. 1b dargestellten zusammengeklappten Position in die in Fig. 1a dargestellte Verlegeposition verschwenkt bzw. aufgeklappt werden. Dadurch eröffnen sich neue Möglichkeiten des Verlegens eines Fußbodenbelages, die weiter unten im Text erläutert werden.

Der zuvor beschriebene Klebstoffstreifen 28 ist in bevorzugter Weise durchgängig entlang der gesamten ersten Längskanten 6 der beiden Paneelen 2 und 4 angeordnet. Um die erfindungsgemäße Wirkung, also die Scharnierfunktion zu erfüllen, reicht es jedoch aus, dass der Klebstoffstreifen 28 zumindest abschnittsweise in Längsrichtung entlang der ersten Längskanten 6 vorgesehen ist.

Bei dem in Fig. 1 dargestellten ersten Ausführungsbeispiel sind die Oberflächen der mit dem Klebstoffstreifen 28 versehenen ersten Längskanten 6 unter einem Winkel gegenüber den Senkrechten bezogen auf die Oberseiten 14 geneigt, wobei die Oberflächen einen Winkel von weniger als 90° mit der Oberseite 14 bilden. Mit anderen Worten laufen die ersten Längskanten 6 der beiden Paneelen 2 und 4 unter einem spitzen Winkel an den Oberseiten 14 zu. Daraus ergibt sich die in Fig. 1a dargestellte V-förmige Nut zwischen den beiden Paneelen 2 und 4, in der der Klebstoffstreifen 28 angeordnet ist. In der in Fig. 1b dargestellten Position ist der obere Teil des Klebstoffstreifens 28 um 180° um die Schwenkachse herum verschwenkt angeordnet, wie es sich durch das Verschwenken der Paneele 4 relativ zur Paneele 2 ergibt.

Fig. 1 zeigt weiterhin, dass der Klebstoffstreifen 28 sich nur über einen Teil der Oberfläche der ersten Längskanten 6 erstreckt.

Fig. 2 zeigt ein zweites Ausführungsbeispiel eines erfindungsgemäßen Fußbodenbelagselementes, bei dem abweichend vom ersten Ausführungsbeispiel die Oberflächen der mit dem Klebestreifen 28 versehenen ersten Längskanten 6 eine obere Teilfläche 30 aufweisen, die unter einem stumpfen Winkel zur Oberseite 14 ausgerichtet ist. Der Klebstoffstreifen 28 weist dann die in Fig. 2a und 2b dargestellte und von der in Fig. 1 dargestellten Form abweichende Form auf. Insbesondere ergibt sich eine Verdickung des Klebstoffstreifens im Bereich der Oberseiten 14, wodurch die Scharnierfunktion des. Klebstoffstreifens verstärkt wird. Denn die Schwenkachse verläuft gerade in dem Bereich des Klebstoffstreifens 28, der durch die geometrische Ausgestaltung der ersten Längskanten 6 verdickt ist. Bei dem zweiten Ausführungsbeispiel ergibt sich somit zwangsläufig, dass in der in Fig. 2a dargestellten Verlegeposition der Klebstoffstreifen 28 zu erkennen ist.

Dieses gilt jedoch nicht notwendiger Weise für das in Fig. 1 dargestellte Ausführungsbeispiel, da dort die beiden Paneelen 2 und 4 im Bereich der Längskanten 6 aneinander angrenzen und der Klebstoffstreifen 28 nicht notwendiger Weise sichtbar ist.

Weiterhin ergibt sich bei dem in Fig. 2 dargestellten Ausführungsbeispiel, dass der Klebstoffstreifen 28 die ersten Längskanten 6 in voller Höhe überdeckt. Dadurch wird eine maximale Klebekraft erzeugt, denn die gesamte zur Verfügung stehende Oberfläche der Längskanten 6 wird für die klebende Verbindung ausgenutzt.

In Fig. 3 ist ein drittes Ausführungsbeispiel eines erfindungsgemäßen Fußbodenbelagselementes dargestellt, bei dem die Oberflächen der mit dem Klebestreifen 28 versehenen ersten Längskanten im wesentlichen senkrecht zur
Oberseite 14 ausgerichtet sind. Dadurch ergibt sich die in Fig. 3b dargestellte im wesentlichen gerade verlaufende Ausrichtung des Klebstoffstreifens 28. Bei der in Fig. 3a dargestellten Position der beiden Paneelen 2 und 4 ist der Klebstoffstreifen 28 vollständig umgeklappt, so dass eine doppelte Klebstoffschicht den Abstand zwischen beiden Paneelen 2 und 4 entlang der ersten Längskanten definiert. Somit ist auch bei diesem Ausführungsbeispiel im verlegten Zustand des Fußbodenbelagselementes der Klebstoffstreifen 28 als Fuge zwischen den Oberseiten 14 der Paneelen 2 und 4 zu erkennen.

Fig. 6 zeigt ein weiteres Ausführungsbeispiel eines Fußbodenbelagselementes der vorliegenden Erfindung. Bei diesem Ausführungsbeispiel sind insgesamt acht Paneelen vorgesehen, die miteinander verbunden sind. Das Fußbodenbelagselement weist die beiden in Fig. 4 dargestellten Paneelen 2 und 4 sowie weitere Paneelen 32 auf. Wie sich weiterhin aus Fig. 6 ergibt weisen die außen gelegenen Paneelen 2 und 4 jeweils eine erste Längskante 6 und eine zweite Längskante 8 auf. Dagegen sind die innen gelegenen Paneelen 32 jeweils mit zwei ersten Längskanten 6 versehen, die jeweils paarweise mit einem Klebstoffstreifen 28 miteinander verbunden sind. Ebenso sind die ersten Längskanten der beiden Paneelen 2 und 4 mit den ersten Längskanten der benachbart angeordneten inneren Paneelen 32 verbunden. Es ergibt sich somit ein Verbund von acht Paneelen, die das Fußbodenbelagselement bilden. In Fig. 6 sind dabei die jeweils vier Paneele aufweisenden Teilstücke des Fußbodenbelagselementes umgeklappt dargestellt, entsprechend beispielsweise Fig. 1b, so dass die Paneelen 2 und 4 bzw. 32 jeweils paarweise in der ersten Position mit ihren Oberseiten 14 aneinander liegen. Somit kann für eine Lagerung oder einen Transport das in Fig. 6 dargestellte insgesamt aus acht Paneelen bestehende Fußbodenbelagselement zumindest auf die Breite von vier Paneelen verringert werden, indem die Paneelen so umgeklappt werden, wie es Fig. 6 zeigt.

Das Verlegen der erfindungsgemäßen Fußbodenbelagselemente erfolgt unabhängig von der konkreten Ausgestaltung gemäß einer der zuvor beschriebenen Ausführungsbeispiele wie folgt.

Wie zuvor mehrfach erwähnt, können die Fußbodenbelagselemente in den in den Fig. 1b, 2b, 3b und 6 dargestellten ersten Position gelagert und transportiert werden, wodurch eine möglichst geringe Breite eines Stapels von Fußbodenbelagselementen erreicht wird. Vor einem Verlegen werden die Fußbodenbelagselemente so mittels des durch den Klebstoffstreifen 28 erzeugten Scharniers in die in den Fig. 1a, 2a, 3a, 4 und 5 dargestellten Position verschwenkt, so dass die Unterseiten 12 der Paneelen 2, 4 und gegebenenfalls 32 auf dem Fußbodenuntergrund angeordnet sind. Das Fußbodenbelagselement kann dann insgesamt, mit beispielsweise 2 oder 8 Paneelen auf dem Fußbodenuntergrund verschoben werden und mit bereits verlegten Fußbodenbelagselementen verbunden werden. Dazu dienen dann die an den zweiten Längskanten 8 und an den Querkanten 10 ausgebildeten mechanischen Verbindungsmitteln 16, 18 und/oder 20, 22. Das Verlegen des Fußbodenbelages kann dadurch schneller und präziser durchgeführt werden, als es mit einzelnen Paneelen der Fall ist, da die Fußbodenbelagselemente jeweils an sich eine größere Fläche als einzelne Paneelen einnehmen. Insbesondere das Ausrichten bei dem Verbinden der Fußbodenbelagselemente mit einer zu verklebenden Nut-Feder-Verbindung wird durch die verlängerte Querkante präziser und einfacher.

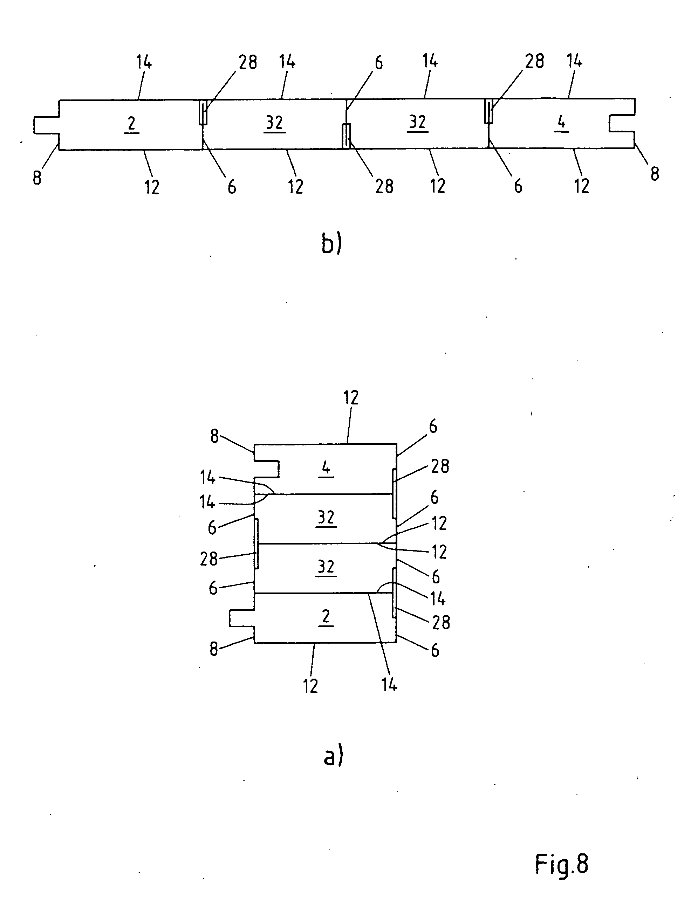

Fig. 8 zeigt in einer schematisierten Weise ein fünftes Ausführungsbeispiel eines Fußbodenbelagselementes, bei dem insgesamt vier Paneelen 2, 4 und 32 miteinander verbunden sind. Fig. 8b zeigt die Paneelen 2, 4 und 32 in der verlegten Position, während Fig. 8a die Paneelen in der gestapelten Position zeigt. Die außen gelegenen Paneelen 2 und 4 weisen eine erste Längskante 6 und eine zweite Längskante 8 auf und die innen gelegenen Paneelen 32 weisen jeweils zwei erste Längskanten 6 aufweisen, die paarweise mit einem Scharnier 28 miteinander verbunden sind.

Die Schwenkachsen der Scharniere 28 zwischen jeweils zwei Paneelen 2,32, 32,32 und 32,4 sind abwechselnd benachbart zu den Unterseiten 12 und benachbart zu den Oberseiten 14 angeordnet. Das bedeutet (in Fig. 8b von links nach rechts) im einzelnen folgendes. Die ersten Längskanten 6 der Paneelen 2 und 32 sind mit einem oben angeordneten Scharnier 28, die ersten Längskanten 6 der beiden Paneelen 32 mit einem unten angeordneten Scharnier 28 und die beiden Paneelen 32 und 4 mit einem oben angeordneten Scharnier 26 verbunden. Dadurch ist es möglich, die Paneelen 2, 4 und 32 abwechselnd mit den Unterseiten 12 oder mit den Oberseiten 14 aneinanderliegend zu stapeln, wie Fig. 8a zeigt.

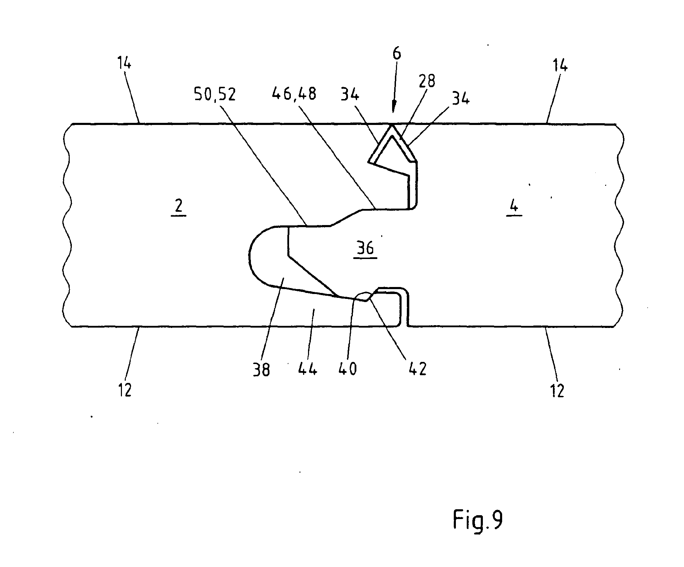

In den Fig. 9 bis 11 sind weitere Ausführungsbeispiele der vorliegenden Erfindung dargestellt, bei denen die ersten Längskanten 6 zusätzlich zum Scharnier 28 mit Verriegelungselementen und mit Passflächen versehen sind, wie im folgenden im Detail erläutert wird.

Fig. 9 zeigt ein Ausführungsbeispiel, bei dem die ersten Längskanten mit einem oben angeordneten Scharnier 28 der zuvor in vielen Varianten beschriebenen Form befestigt ist. Daher können beide Paneelen 2 und 4 um eine benachbart zu den Oberseiten 14 angeordnete Schwenkachse gedreht bzw. geschwenkt werden. Das Scharnier 28 ist dabei an schräg verlaufenden Teilflächen 34 der ersten Längskanten 6 befestigt.

Unterhalb des Scharniers 28 sind Verriegelungselemente in Form einer Feder 36 und einer Nut 38 ausgebildet, die durch eine Schwenkbewegung der beiden Paneelen 2 und 4 um die durch das Scharnier 28 festgelegte Schwenkachse miteinander in Eingriff gebracht werden können. Fig. 9 zeigt dabei den verriegelten Zustand nach dem Verschwenken.

Die Feder 36 und die Nut 38 weisen zueinander korrespondierende Verriegelungsflächen 40 und 42 auf, wobei die Verriegelungsfläche 40 an der Unterseite der Feder 36 und die Verriegelungsfläche 42 an der unteren Lippe 44 der Nut 38 ausgebildet sind.

Darüber hinaus weisen die Feder 36 und die Nut 38 zueinander korrespondierende Paare von Passflächen 46, 48 und 50, 52 auf, die im verriegelten Zustand aneinander anliegen und durch die Verriegelungsflächen aneinander gehalten werden.

Somit wird insgesamt eine stabile und belastbare Verbindung zwischen den beiden Paneelen 2 und 4 erreicht.

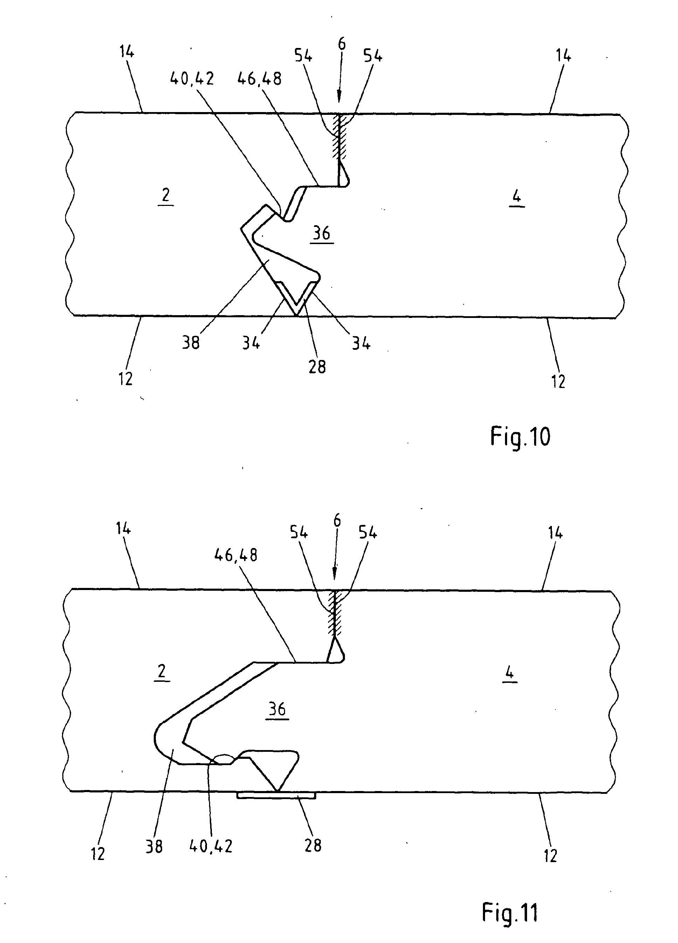

Fig. 10 zeigt ein Ausführungsbeispiel, bei dem die ersten Längskanten 6 mit einem unten benachbart zu den Unterseiten 12 angeordneten Scharnier 28 versehen sind. Somit können beide Paneelen 2 und 4 in Fig. 10 von unten zueinander verschwenkt werden, bis die Verriegelungselemente miteinander in Eingriff gelangen. Dazu sind ähnlich wie bei dem zuvor beschriebenen Ausführungsbeispiel eine Feder 36 und eine Nut 38 vorgesehen, die miteinander korrespondierende Verriegelungsflächen 40 und 42 aufweisen. Diese sind in Fig. 10 auf der nach oben gerichteten Seite der Feder 36 angeordnet, also ebenfalls der Schwenkachse abgewandt, wie es in Fig. 9 der Fall ist. Auch bei dem in Fig. 10 dargestellten Ausführungsbeispiel sind Passflächen vorgesehen, die im Zusammenwirken mit den Verriegelungselementen 40 und 42 eine genaue Ausrichtung der Paneelen 2 und 4 zueinander ermöglichen.

Wie Fig. 10 weiterhin zeigt, stehen zwei benachbart zu den Oberseiten 14 angeordnete Teilflächen 54 der beiden Längskanten 6 in Kontakt miteinander. Aufgrund der Verriegelung durch die Verriegelungsflächen 40 und 42 wird eine Spaltbildung an der Grenze zwischen den beiden Teilflächen 54 weitgehend vermieden. Dennoch kann es vorteilhaft sein, die Teilflächen 54 vor dem Verriegeln mit einem Klebstoff zu versehen, um eine dauerhafte Lückenschließung zu erreichen und das Eindringen von Feuchtigkeit oder Schmutz zu verhindern. Der vom Klebstoff eingenommene Materialbereich der Paneelen 2 und 4 ist in Fig. 10 zu beiden Seiten der Teilflächen 54 schraffiert dargestellt.

Fig. 11 zeigt schließlich ein weiteres Ausführungsbeispiel, bei dem das Scharnier 28 an den Unterseiten 12 der beiden Paneelen 2 und 4 befestigt ist. Da es sich um die nach dem Verlegen des Fußbodenbelagselements nicht sichtbare Seite der Paneelen handelt, kann somit das Scharnier 28 leicht angebracht werden und bietet eine zuverlässige schwenkbare Verbindung zwischen beiden Paneelen 2 und 4 dar.

Wie Fig. 11 zeigt, sind bei diesem Ausführungsbeispiel die Verriegelungsflächen 40 und 42 der Feder 36 und der Nut 38 auf der dem Scharnier 28 zugewandten Seite der Feder 36 angeordnet. Dadurch wird das Verriegeln erleichtert, jedoch ist es auch hier vorteilhaft, wenn die Teilflächen 54 der beiden ersten Längskanten 6 miteinander zu verkleben. Dieses ist - wie in Fig. 10 - mit einer Schraffur dargestellt. Dieses dient einem dauerhaften Verschließen der Oberflächen 14 miteinander.

## Patentansprüche

1. Fußbodenbelagselement
- mit zwei Paneelen (2,4), die jeweils eine erste Längskante (6) und eine zweite Längskante (8), zwei Querkanten (10), eine dem Fußbodenuntergrund zugewandte Unterseite (12) und eine vom Fußbodenuntergrund abgewandte Oberseite (14) aufweisen, und
- mit an den zweiten Längskanten (8) und an den Querkanten (10) ausgebildeten mechanischen Verbindungsmitteln (16,18;20,22) für ein wechselseitiges Verbinden mit weiteren Paneelen,
**dadurch gekennzeichnet,**
- **dass** zumindest abschnittsweise an den aneinandergrenzenden ersten Längskanten (6) der Paneelen (2,4) ein Scharnier (28) ausgebildet ist,
- wobei das Scharnier ein Verschwenken der Paneelen (2,4) um eine im wesentlichen parallel zu den ersten Längskanten (6) ausgerichtete Schwenkachse ermöglicht.

2. Fußbodenbelagselement nach Anspruch 1,
**dadurch gekennzeichnet,**
**dass** das Scharnier (28) mit einem Klebstoff an der Längskante (6) befestigt ist.

3. Fußbodenbelagselement, nach Anspruch 2,
**dadurch gekennzeichnet,**
**dass** das Scharnier als Klebestreifen (28) ausgebildet ist.

4. Fußbodenbelagselement nach Anspruch 3,
**dadurch gekennzeichnet,**
**dass** der Klebestreifen als Klebeband mit einem Trägermaterial und einer damit verbundenen Klebstoffschicht ausgebildet ist.

5. Fußbodenbelagselement nach Anspruch 3,
**dadurch gekennzeichnet,**
**dass** der Klebestreifen als Klebstoffstreifen (28) ausgebildet ist.

6. Fußbodenbelagselement nach Anspruch 5,
**dadurch gekennzeichnet,**
**dass** der Klebstoff des Klebstoffstreifens (28) ein elastischer, insbesondere dauerelastischer Klebstoff ist.

7. Fußbodenbelagselement nach Anspruch 6,
**dadurch gekennzeichnet,**
**dass** der Klebstoff ein Polyuretanklebstoff, ein Reaktivschmelzklebstoff, ein Schmelzklebstoff, insbesondere Ethylenvinylacetat, oder ein Silikonklebstoff ist.

8. Fußbodenbelagselement nach Anspruch 1,
**dadurch gekennzeichnet,**
**dass** das Scharnier (28) mechanisch an der ersten Längskante (6) befestigt ist.

9. Fußbodenbelagselement nach Anspruch 8,
**dadurch gekennzeichnet,**
**dass** das Scharnier (28) vernagelt, verschraubt, formschlüssig oder kraftschlüssig mit der ersten Längskante (6) verbunden ist.

10. Fußbodenbelagselement nach einem der Ansprüche 1 bis 9,
**dadurch gekennzeichnet,**
- **dass** die Schwenkachse benachbart zu den Oberseiten (14) angeordnet ist und
- **dass** die Paneelen (2,4) zwischen einer ersten Position, in der die Oberseiten (14) aneinander liegen, und einer zweiten Position, in der die Oberseiten (14) im wesentlichen in einer Ebene liegend ausgerichtet sind, verschwenkbar sind.

11. Fußbodenbelagselement nach Anspruch 10,
**dadurch gekennzeichnet,**
**dass** die Oberflächen der mit dem Scharnier (28) versehenen ersten Längskanten (6) unter einem Winkel gegenüber der Senkrechten geneigt sind, wobei die Oberflächen einen Winkel von weniger als 90° mit der Oberseite (14) bilden.

12. Fußbodenbelagselement nach Anspruch 11,
**dadurch gekennzeichnet,**
**dass** die Oberflächen der mit dem Scharnier (28) versehenen ersten Längskanten (6) eine obere Teilfläche (30) aufweisen, die unter einem stumpfen Winkel zur Oberseite (14) ausgerichtet ist.

13. Fußbodenbelagselement nach Anspruch 10,
**dadurch gekennzeichnet,**
**dass** die Oberflächen der mit dem Scharnier (28) versehenen ersten Längskanten (6) im wesentlichen senkrecht zur Oberseite (14) ausgerichtet sind.

14. Fußbodenbelagselement nach einem der Ansprüche 1 bis 9,
**dadurch gekennzeichnet,**
- **dass** die Schwenkachse benachbart zu den Unterseiten (12) angeordnet ist und
- **dass** die Paneelen (2,4) zwischen einer ersten Position, in der die Unterseiten (12) aneinander liegen, und einer zweiten Position, in der die Unterseiten (12) im wesentlichen in einer Ebene liegend ausgerichtet sind, verschwenkbar sind.

15. Fußbodenbelagselement nach Anspruch 14,
**dadurch gekennzeichnet,**
**dass** das Scharnier (28) an den Unterseiten (12) der beiden Paneelen (2,4) befestigt ist.

16. Fußbodenbelagselement nach einem der Ansprüche 1 bis 15,
**dadurch gekennzeichnet,**
**dass** mindestens drei Paneelen (2,4,32) miteinander verbunden sind, wobei die außen gelegenen Paneelen (2,4) eine erste Längskante (6) und eine zweite Längskante (8) aufweisen und wobei die innen gelegenen Paneelen (32) zwei erste Längskanten (6) aufweisen, die jeweils paarweise mit einem Scharnier (28) miteinander verbunden sind.

17. Fußbodenbelagselement nach Anspruch 16,
**dadurch gekennzeichnet,**
**dass** die Schwenkachsen der Scharniere (28) zwischen jeweils zwei Paneelen (2,4,32) abwechselnd benachbart zu den Unterseiten (12) und benachbart zu den Oberseiten (14) angeordnet sind.

18. Fußbodenbelagselement nach Anspruch 16,
**dadurch gekennzeichnet,**
**dass** eine Mehrzahl von Paneelen (2,4,32) vorgesehen sind und dass für eine Lagerung oder einen Transport die Paneelen (2,4,32) aufgerollt sind, wobei die Anzahl der Paneelen pro Umfang der Rolle mindestens 5, vorzugsweise mindestens 10 und insbesondere mindestens 15 beträgt.

19. Fußbodenbelagselement nach einem der Ansprüche 1 bis 18,
**dadurch gekennzeichnet,**
**dass** mechanische Verriegelungselemente (36,38;40,42) an den ersten Längskanten (6) vorgesehen sind, die nach einem Verschwenken der Paneelen (2,4,32) von der ersten Position in die zweite Position verriegelt sind.

20. Fußbodenbelagselement nach Anspruch 19,
**dadurch gekennzeichnet,**
**dass** die Verriegelungselemente (36,38;4042) als verriegelnde Nut-Feder-Verbindung ausgebildet sind.

21. Fußbodenbelagselement nach einem der Ansprüche 1 bis 20,
**dadurch gekennzeichnet,**
**dass** mindestens ein Paar von Passflächen (46,48;50,52) vorgesehen ist, das eine genaue vertikale Lage der beiden Paneelen (2,4,32) zueinander definiert.

22. Fußbodenbelagselement nach Anspruch 21,
**dadurch gekennzeichnet,**
**dass** die Verriegelungselemente (36,38;40,42) die Passflächen (46,48;50,52) der Paneelen (2,4,32) in Anlage aneinander halten.

23. Fußbodenbelagselement nach einem der Ansprüche 1 bis 22,
**dadurch gekennzeichnet,**
**dass** die Längskanten (2,4,32) an der vom Scharnier (28) abgewandten Seite im wesentlichen senkrecht zu den Unterseiten (12) und zu den Oberseiten (14) verlaufende Anlageflächen (54) aufweisen.

24. Fußbodenbelagselement nach Anspruch 23,
**dadurch gekennzeichnet,**
**dass** die Anlageflächen (54) im verlegten Zustand zumindest teilweise miteinander verklebt sind.

25. Fußbodenbelagselement nach Anspruch 24,
**dadurch gekennzeichnet,**
**dass** die benachbart zu den Oberseiten (14) angeordneten Anlageflächen (54) miteinander verklebt sind.

26. Fußbodenbelagselement nach Anspruch 24 oder 25,
**dadurch gekennzeichnet,**
**dass** die Anlageflächen (54) zumindest teilweise eine Oberflächenversiegelung und/oder Oberflächenhärtung aufweisen.

27. Fußbodenbelagselement nach Anspruch 26,
**dadurch gekennzeichnet,**
**dass** die benachbart zu den Oberseiten (14) angeordneten Anlageflächen (54) eine Oberflächenversiegelung und/oder Oberflächenhärtung aufweisen.

28. Fußbodenbelagselement nach einem der Ansprüche 1 bis 27,
**dadurch gekennzeichnet,**
**dass** die mechanischen Verbindungsmittel an den zweiten Längskanten (8) und/oder an den Querkanten (10) als Nut-Feder-Verbindung (16,18;20,22) ausgebildet sind.

29. Fußbodenbelagselement nach Anspruch 28,
**dadurch gekennzeichnet,**
**dass** die mechanischen Verbindungsmittel (16,18) als zu verklebende Nut-Feder-Verbindung ausgebildet ist.

30. Fußbodenbelagselement nach Anspruch 28,
**dadurch gekennzeichnet,**
**dass** die mechanischen Verbindungsmittel (20,22) als mechanisch zu verriegelnde Nut-Feder-Verbindung ausgebildet sind.

31. Fußbodenbelagselement nach einem der Ansprüche 1 bis 30,
**dadurch gekennzeichnet,**
**dass** das Scharnier (28) einen vorgegebenen, vorzugsweise an den Farbton der Oberseite (14) angepassten Farbton aufweist.
